# EUROPÄISCHE PATENTSCHRIFT

(11) **EP 1 067 420 B1**
(45) Veröffentlichungstag und Bekanntmachung des Hinweises auf die Patenterteilung: **10.08.2005**
(21) Anmeldenummer: 00112334.8
(22) Anmeldetag: 09.06.2000
(51) Int. Cl.: G02B 13/14, G02B 21/02

(54) **DUV-taugliches Mikroskop-Objektiv mit parfokalem IR-Fokus**
Microscope objective for deep ultraviolet having a parfocal IR-focus
Objectif de microscope pour l'ultraviolet profond, à mise au point pour l'infrarouge parfocale

(30) Priorität: 09.07.1999 DE 19931949
(43) Veröffentlichungstag der Anmeldung: 10.01.2001
(73) Patentinhaber: Leica Microsystems Semiconductor GmbH, 35578 Wetzlar (DE)
(72) Erfinder: Hoppen, Gerhard, 35578 Wetzlar (DE)
(74) Vertreter: Reichert, Werner F., Dr.

(56) Entgegenhaltungen:
- EP-A- 0 106 471
- EP-A- 0 347 838
- DE-A- 3 915 868

## Beschreibung

Die Erfindung betrifft ein DUV-taugliches Mikroskop-Objektiv mit den Merkmalen des Oberbegriffs des unabhängigen Anspruchs 1.

Die Auflösung eines Mikroskops hängt wesentlich von der Wellenlänge des verwendeten Beleuchtungslichts ab. Konventionelle Mikroskope werden mit Licht im sichtbaren Wellenlängenbereich (kurz als "VIS" für "visible" bezeichnet) betrieben. Zur Auflösung extrem kleiner Strukturen, z.B. auf Wafem oder Schaltungen in der Halbleiterindustrie, ist eine Abbildung bei kürzeren Wellenlängen im tief-ultravioletten Bereich des Lichtspektrums (kurz als "DUV" für "deep ultraviolet" bezeichnet) erforderlich. Das Mikroskopbild wird dabei mit einer für das DUV-Licht empfindlichen TV-Kamera sichtbar gemacht.

Die Materialien in konventionellen VIS-Optiken sind im DUV nicht durchlässig. Daher sind beim DUV-Betrieb aus speziellen Materialien aufgebaute Optiken wie Prismen, Strahlteiler, Tubuslinsen sowie auch Objektive erforderlich, die für DUV-Wellenlängen korrigiert sind. Um den zukünftigen Anforderungen der Halbleiter-Industrie zu entsprechen, weist ein DUV-Mikroskop vorzugsweise Umschaltungsmöglichkeiten zwischen VIS- und DUV-Optiken und der jeweils zugehörigen Beleuchtung auf, bei der auch eine Umschaltung zwischen VIS- und DUV-Objektiven vorgenommen wird.

Zusätzlich ist die Autofokus-Funktion eines Mikroskops eine wesentliche Forderung der Halbleiterindustrie, da gegenüber manuellem Fokussieren durch automatisches (und damit schnelleres) Fokussieren die Anzahl der pro Stunde untersuchten Strukturen erheblich gesteigert werden kann.

Dabei sind die bekannten IR-Laser-Autofokus-Systeme anderen Autofokus-Systemen (z.B. TV-Autofokus-Systemen), die bei der jeweils abbildenden Wellenlänge arbeiten, wegen ihrer höheren Fokussiergeschwindigkeit deutlich überlegen. Die Autofokus-Wellenlänge ist deshalb in den IR-Wellenlängenbereich verlagert, damit eine störungsfreie Einkopplung des IR-Autofokus-Lichts, z.B. über einen dichroitischen Teiler im Abbildungsstrahlengang, möglich ist. Dies verhindert, daß im VIS- oder DUV/UV-Wellenlängenbereich Anteile des Beleuchtungs- bzw. Abbildungsstrahlengangs verloren gehen.

Es besteht daher ein dringendes Bedürfnis der Halbleiter-Industrie, auch ein DUV-Mikroskop mit einem schnellen IR-Autofokus-System zu betreiben. Für den VIS-Bereich gibt es bereits IR-autofokus-taugliche Objektive, für den DUV-Bereich jedoch noch nicht. Zur Darstellung extrem kleiner Strukturen ist insbesondere ein gut korrigiertes DUV-Objektiv mit einer hohen Vergrößerung und großer Apertur erforderlich.

Die DE 39 15 868 C2 beschreibt ein DUV-Objektiv 100x/0.87 bei einer Brennweite von ca. 1,5 mm und einer numerischen Apertur von 0,87. Es besteht aus mindestens elf Linsen, die eine Frontlinsengruppe und eine hintere Linsengruppe bilden. Die hintere Linsengruppe ist als Schiebeglied ausgebildet. Durch Verschieben des Schiebegliedes ist der Luftabstand zur Frontlinsengruppe verstellbar und dadurch der brauchbare Wellenlängenbereich im DUV und in einem Teil des sichtbaren Spektrums einstellbar. Die Korrektion der sphärischen Aberration des Objektivs ist jedoch beispielsweise bei einer Wellenlänge von 248 nm, einer gängigen DUV-Beleuchtungswellenlänge, nicht besonders gut. Der größte Nachteil liegt jedoch darin, daß das Objektiv keine parfokale Fokuslage im nahen infraroten Wellenlängenbereich (kurz "IR" genannt), d.h. bei IR-Wellenlängen > 760 nm, besitzt. Damit ist das Objektiv nicht für den Betrieb an einem DUV-Mikroskop mit einer IR-Laser-Autofokus-Vorrichtung geeignet, die mit IR-Wellenlängen arbeitet.

Es ist daher Aufgabe der vorliegenden Erfindung, ein sehr gut korrigiertes DUV-Objektiv mit einer numerischen Apertur von mindestens 0.80 und einer kurzen Brennweite anzugeben, welches IR-autofokus-tauglich ist.

Diese Aufgabe wird gelöst durch ein DUV-Objektiv, das die Merkmale des Anspruchs 1 aufweist. Vorteilhafte Ausführungen des Objektivs sind in den Unteransprüchen angegeben.

Ein erfindungsgemäßes Objektiv besteht aus einem Linsensystem aus Quarzglas und Flußspat. Es weist einen Fokus in einem Wellenlängenband um eine für die DUV-Beleuchtung ausgewählte DUV-Wellenlänge λ_{DUV} sowie denselben Fokus für eine IR-Wellenlänge λ_{IR} im nahen IR-Bereich auf. Bisher galt es als unmöglich, eine Rechnung für eine solche Fokus-Kombination aufzustellen, weil mit üblichen rechnerischen Ansätzen und gängigen Methoden und Überlegungen der Optikrechnung ein solches sowohl im IR äls auch im DUV fokussierendes Objektiv als unrealisierbar galt. Als Kriterium zur Beurteilung der Fokussiereigenschaften werden die sogenannten spektralen Bildortkurven eines Objektivs herangezogen, wobei die Bildortkurve für den paraxialen Bereich und die Bildortkurve für die volle Apertur verglichen werden. Die spektralen Bildortkurven geben die Fokuslagen des Objektivs in Abhängigkeit von der Wellenlänge an.

Überraschenderweise hat sich gezeigt, daß durch eine spezielle Ausbildung des vorletzten Elements eines Objektivs die genannten beiden spektralen Bildortkurven eines Objektivs im gesamten Wellenlängenbereich vom DUV bis zum IR nahezu zur Deckung gebracht werden können: dieses vorletzte Element ist erfindungsgemäß beidseitig konkav ausgebildet, und sein objektseitiger Außenradius ist deutlich kleiner als der bildseitige Außenradius.

Die gute Übereinstimmung der beiden Bildortkurven ist ein Anzeichen für eine gute Korrektion der sphärischen Aberration. Je nach Ausführungsbeispiel des erfindungsgemäßen Objektivs ist das vorletzte Element entweder als ein Dublett oder ein Triplett oder als ein Dublett in Kombination mit einer Einzellinse oder nur aus Einzellinsen aufgebaut. Als Materialien können Kombinationen aus Quarzglas und Flußspat oder aus Quarzglas und Lithiumfluorid verwendet werden. Dabei erweisen sich bestimmte Materialfolgen als vorteilhaft. So weist in einer vorteilhaften Ausführungsform ein Dublett in Abbildungsrichtung die Materialfolge Quarzglas/ Flußspat bzw. ein Triplett in Abbildungsrichtung die Materialfolge Quarzglas/ Flußspat/ Quarzglas oder Quarzglas/Lithiumfluorid/Quarzglas auf.

Durch das erfindungsgemäße Größenverhältnis der Außenradien zueinander wird der bis dahin von den vorhergehenden Linsen bzw. Kittgliedern geringfügig abgelenkte Abbildungsstrahlengang stark gebrochen. Diese Art der Strahlführung verstößt gegen die üblicherweise bei der Optikrechnung verwendete Regel, den Strahlengang mit jedem abbildenden Element stets nur sanft zu verändern. So bewirkt ein scharfer Übergang im Strahlengang eine starke Toleranzempfindlichkeit des Objektivs, so daß ein solches Objektiv nur schwierig zu fertigen ist bzw. hohe Anforderungen an die Fertigung stellt.

Andererseits erwies es sich aber nur mit einem vorletzten Element mit dieser besonderen Formgebung als möglich, sowohl für einen Bereich um eine DUV-Wellenlänge λ_{DUV} als auch für eine IR-Wellenlänge λ_{IR} denselben Fokus zu erzielen. Wird in einem erfindungsgemäßen Objektiv das betreffende vorletzte Element mit einer moderaten Formgebung ausgestattet und dadurch der vorher abgeknickte Strahlenverlauf wieder geglättet, so gehen sowohl die gute Korrektion als auch der Fokus für die IR-Wellenlänge λ_{IR} verloren.

Die spektralen Bildortkurven eines erfindungsgemäßen Objektivs weisen bei der gewählten DUV-Wellenlänge λ_{DUV} ein Minimum auf, welches die Fokuslage für diese Wellenlänge λ_{DUV} angibt. Im IR-Wellenlängenbereich hat die Bildortkurve bei der gewünschten IR-Wellenlänge λ_{IR} einen Null-Durchgang. Das heißt, die Fokuslagen der DUV-Wellenlänge λ_{DUV} und der IR-Wellenlänge λ_{IR} sind gleich, d. h. konfokal. Außerdem verlaufen über den Spektralbereich von λ_{DUV} bis λ_{IR} die paraxiale Bildortkurve und die Bildortkurve für die volle Apertur fast deckungsgleich.

Da die spektrale Bildortkurve um ihr Minimum bei λ_{DUV} herum in einem Wellenlängenband λ_{DUV} ± Δλ, mit Δλ= 8 nm innerhalb der Tiefenschärfe verläuft, kann dieses gesamte DUV-Wellenlängenband zur Abbildung genutzt werden. Dies hat gegenüber einem monochromatischen Fokus im DUV den Vorteil, daß zur Beleuchtung des Mikroskops kein teurer Laser erforderlich ist, sondern eine preiswertere DUV-Spektrallampe mit endlicher Linienbreite ausreicht. Es ist jedoch möglich, jede in die Nähe des DUV-Wellenlängenbandes fallende Laserlinie zu benutzen, weil diese monochromatisch ist und bei monochromatischer Beleuchtung kein Farbfehler in der Abbildung auftritt.

Wird nun eine bestimmte DUV-Wellenlänge für die Berechnung des DUV-Fokus zugrunde gelegt, ist es mit einem erfindungsgemäßen vorletzten Element sogar möglich, für verschiedene IR-Fokuswellenlängen jeweils ein passendes Objektiv aufzubauen. Damit kann für IR-Wellenlängen ≥ 760 nm, also passend zu einer Vielzahl möglicher IR-Laserdioden für einen IR-Laser-Autofokus, ein jeweils passendes, IR-autofokus-taugliches DUV-Objektiv angegeben werden.

Die erfindungsgemäßen Objektive weisen kurze Brennweiten von höchstens 1,6 mm , eine große Apertur von mindestens 0,9 und eine gute Korrektion aller Bildfehler auf. Der freie Arbeitsabstand liegt je nach Ausführungsbeispiel ungefähr zwischen 0,19 und 0,22 mm.

Die Erfindung wird anhand von Ausführungsbeispielen mithilfe der schematischen Zeichnung näher erläutert. Es zeigen:
- ***Fig. 1:***: einen Schnitt durch ein erstes erfindungsgemäßes Objektiv mit einem DUV-Fokus bei λ_{DUV} = 248 nm und einem IR-Fokus bei λ_{IR} = 760 nm;
- ***Fig. 2:***: einen Schnitt durch ein zweites erfindungsgemäßes Objektiv mit einem DUV-Fokus bei λ_{DUV} = 248 nm und einem IR-Fokus bei λ_{IR} = 825 nm;
- ***Fig. 3:***: einen Schnitt durch ein drittes erfindungsgemäßes Objektiv mit einem DUV-Fokus bei λ_{DUV} = 248 nm und einem IR-Fokus bei λ_{IR} = 885 nm;
- ***Fig. 4:***: einen Schnitt durch ein viertes erfindungsgemäßes Objektiv mit einem DUV-Fokus bei λ_{DUV} = 248 nm und einem IR-Fokus bei λ_{IR} = 905 nm;
- ***Fig. 5:***: Tabelle 1 mit den Konstruktionsdaten des ersten Objektivs aus ***Fig.1*****;**
- ***Fig. 6:***: Tabelle 2 mit den Konstruktionsdaten des zweiten Objektivs aus ***Fig.2*****;**
- ***Fig. 7:***: Tabelle 3 mit den Konstruktionsdaten des dritten Objektivs aus ***Fig.3*****;**
- ***Fig. 8:***: Tabelle 4 mit den Konstruktionsdaten des vierten Objektivs aus ***Fig.4*****;**
- ***Fig. 9:***: die spektralen Bildortkurven des ersten Objektivs aus ***Fig.1*****;**
- ***Fig. 10:***: die spektralen Bildortkurven des zweiten Objektivs aus ***Fig.2*****;**
- ***Fig. 11:***: die spektralen Bildortkurven des dritten Objektivs aus ***Fig.3*****;**
- ***Fig. 12:***: die spektralen Bildortkurven des vierten Objektivs aus ***Fig.4*****;**
- ***Fig. 13:***: einen Schnitt durch ein mit den Objektiven aus ***Fig.1-4*** verwendetes, auf λ_{DUV} = 248 nm abgestimmtes Tubuslinsensystem;
- ***Fig. 14:***: Tabelle 5 mit den Konstruktionsdaten des Tubuslinsensystems aus ***Fig.13*****;**
- ***Fig. 15:***: schematischer Aufbau des Strahlengangs zwischen Objektiv, Tubuslinsensystem und IR-Autofokus;
- ***Fig. 16a:***: Astigmatismus für das Kompensationssystem, bestehend aus dem Objektiv aus ***Fig. 4*** und dem Tubuslinsensystem aus ***Fig. 13*****;**
- ***Fig. 16b:***: sphärische Aberration für das Kompensationssystem, bestehend aus dem Objektiv aus ***Fig. 4*** und dem Tubuslinsensystem aus ***Fig. 13*****;**
- ***Fig. 16c:***: Abweichung von der Sinusbedingung für das Kompensationssystem, bestehend aus dem Objektiv aus ***Fig. 4*** und dem Tubuslinsensystem aus ***Fig. 13*****;**
- ***Fig. 17:***: einen Schnitt durch ein fünftes erfindungsgemäßes Objektiv mit einem DUV-Fokus bei λ_{DUV} = 266 nm und einem IR-Fokus bei λ_{IR} =780 nm;
- ***Fig. 18:***: einen Schnitt durch ein sechstes erfindungsgemäßes Objektiv mit einem DUV-Fokus bei λ_{DUV} = 266 nm und einem IR-Fokus bei λ_{IR} =785 nm;
- ***Fig. 19:***: einen Schnitt durch ein siebentes erfindungsgemäßes Objektiv mit einem DUV-Fokus bei λ_{DUV} = 266 nm und einem IR-Fokus bei λ_{IR} = 845 nm;
- ***Fig. 20:***: Tabelle 6 mit den Konstruktionsdaten des fünften Objektivs aus ***Fig. 17*****;**
- ***Fig. 21:***: Tabelle 7 mit den Konstruktionsdaten des sechsten Objektivs aus ***Fig. 18*****;**
- ***Fig. 22:***: Tabelle 8 mit den Konstruktionsdaten des siebten Objektivs aus ***Fig.19*****;**
- ***Fig. 23:***: die spektralen Bildortkurven des fünften Objektivs aus ***Fig.17*****;**
- ***Fig. 24:***: die spektralen Bildortkurven des sechsten Objektivs aus ***Fig.18*****;**

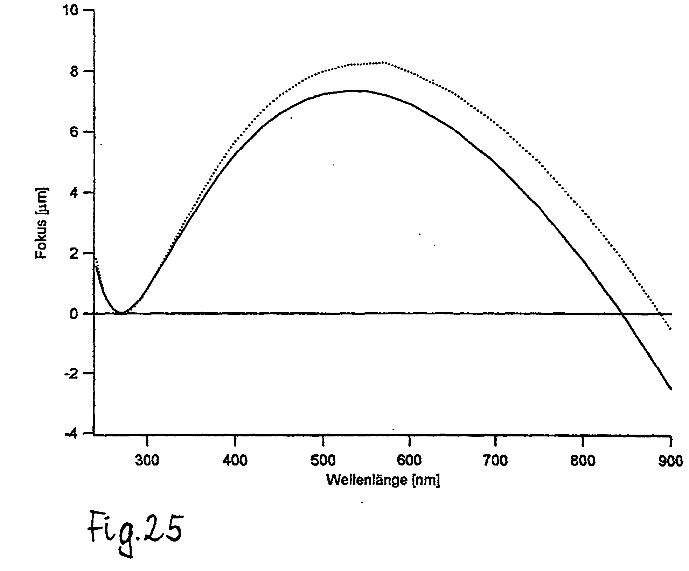

- ***Fig. 25:***: die spektralen Bildortkurven des siebten Objektivs aus ***Fig.19*****;**
- ***Fig. 26:***: einen Schnitt durch ein mit den Objektiven aus ***Fig.17-19*** verwendetes, auf λ_{DUV} = 266 nm abgestimmtes Tubuslinsensystem;
- ***Fig. 27:***: Tabelle 9 mit den Konstruktionsdaten des Tubuslinsensystems aus ***Fig.26*****.**

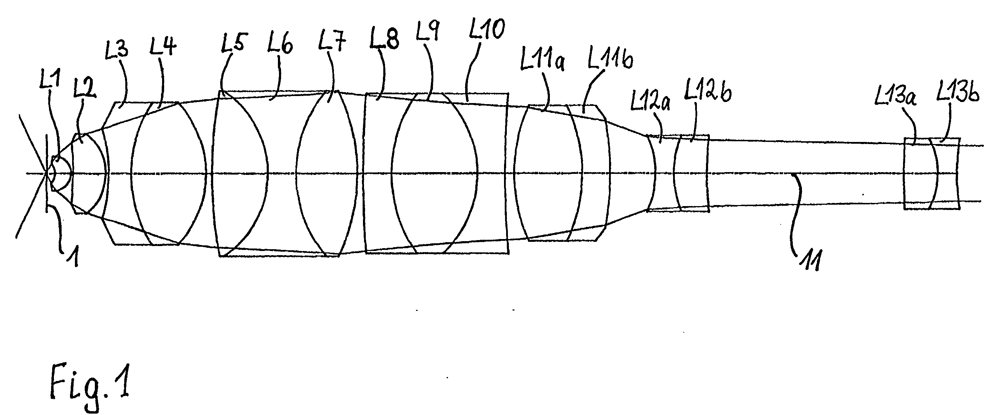

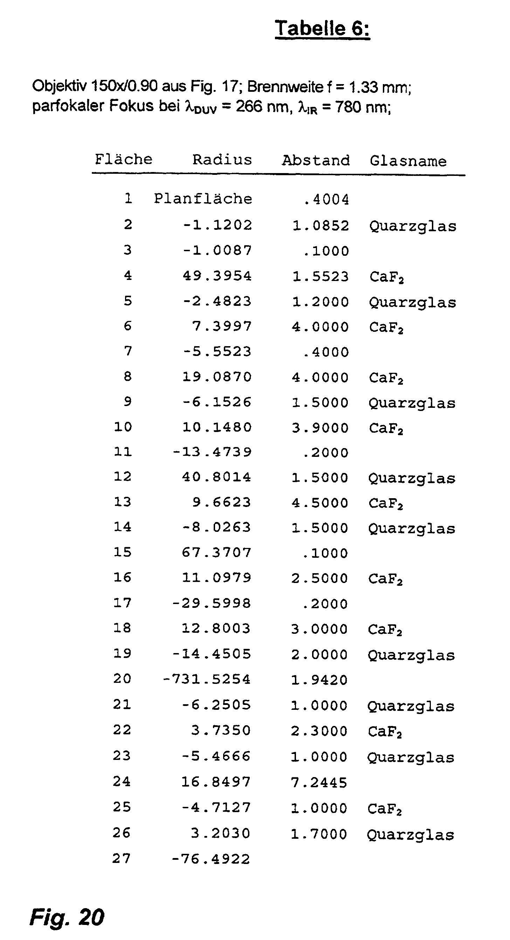

Die Objektive in ***Fig. 1-4*** sind alle für einen DUV-Wellenlängenbereich λ_{DUV} = 248 nm ± 8 nm korrigiert und unterscheiden sich durch die angegebenen IR-Fokus-Wellenlängen. Die Objektive in ***Fig. 17- 19*** sind alle für einen DUV-Wellenlängenbereich λ_{DUV} = 266 nm ± 8 nm korrigiert und unterscheiden sich ebenfalls durch die angegebenen IR-Fokus-Wellenlängen. Die Sehfeldzahlen (SFZ) betragen bei allen Ausführungsbeispielen SFZ = 11. Der freie Arbeitsabstand liegt je nach Ausführungsbeispiel zwischen 0,19 und 0,22 mm.

In Lichtrichtung gesehen haben die angeführten Ausführungsbeispiele prinzipiell folgenden gemeinsamen schematischen Aufbau:
- eine sammelnde Einzellinse L1 aus Quarzglas als Frontlinse,
- eine sammelnde Einzellinse L2 aus Flußspat,
- ein Dublett, bestehend aus einer Zersteuungslinse L3 aus Quarzglas und einer Sammellinse L4 aus Flußspat,
- ein Triplett L5+L6+L7 aus Flußspat/Quarzglas/Flußspat,
- ein Triplett L8+L9+L10 aus Quarzglas/Flußspat/ Quarzglas,
- eine sammelnde Linsengruppe L11, mit je nach Ausführungsbeispiel unterschiedlichem Aufbau, entweder als Einzellinse L11 oder als Dublett L11a+L11b oder als Einzellinse L11a mit einem nachfolgenden Dublett L11b+L11c;
- ein erfindungsgemäßes zerstreuendes vorletztes Element, das beidseits konkav geformt ist und dessen objektseitiger Außenradius deutlich kleiner ist als der bildseitige Außenradius und das je nach Ausführungsbeispiel unterschiedlich aufgebaut sein kann, z.B. als zerstreuendes Dublett L12a+L12b oder als Triplett L12a+L12b+L12c;
- ein zerstreuendes Dublett L13a+L13b , bestehend aus einer Sammellinse L13a aus Quarzglas und einer Zerstreuungslinse L13b aus Flußspat.

Nachfolgend werden die einzelnen Ausführungsbeispiele und die Varianten zu dem oben angegebenen schematischen Aufbau beschrieben. In den Schnittzeichnungen befindet sich ein Objekt 1 im Fokus. Von den Linsen auf einer optischen Achse 11 ist stets L1 eine Frontlinse.

Die Tabellen mit den Konstruktionsdaten und die spektralen Bildortkurven werden bei den Beschreibungen der Beispiele jeweils angegeben. In den Tabellen mit den Konstruktionsdaten bezeichnet die Fläche 1 jeweils die Lage des Objekts 1 im Fokus. Die nachfolgenden Flächen sind fortlaufend durchnumeriert.

Die spektrale Bildortkurve für den paraxialen Bereich ist jeweils als punktierte Linie, die spektrale Bildortkurve für die volle Apertur jeweils als durchgezogene Linie dargestellt. Die Bildortkurven zeigen jeweils ein Minimum bei einer DUV-Wellenlänge λ_{DUV}, das eine Null-Linie definiert, und einen Null-Durchgang bei einer IR-Wellenlänge λ_{IR}. Um das Minimum herum ist innerhalb des Tiefenschärfebereichs mit λ_{DUV} ± 8 nm jeweils ein DUV-Wellenlängenband definiert, innerhalb dessen das Objektiv fokussiert. Der Null-Durchgang bezeichnet einen zum DUV-Fokus parfokalen Fokus bei der IR-Wellenlänge λ_{IR}.

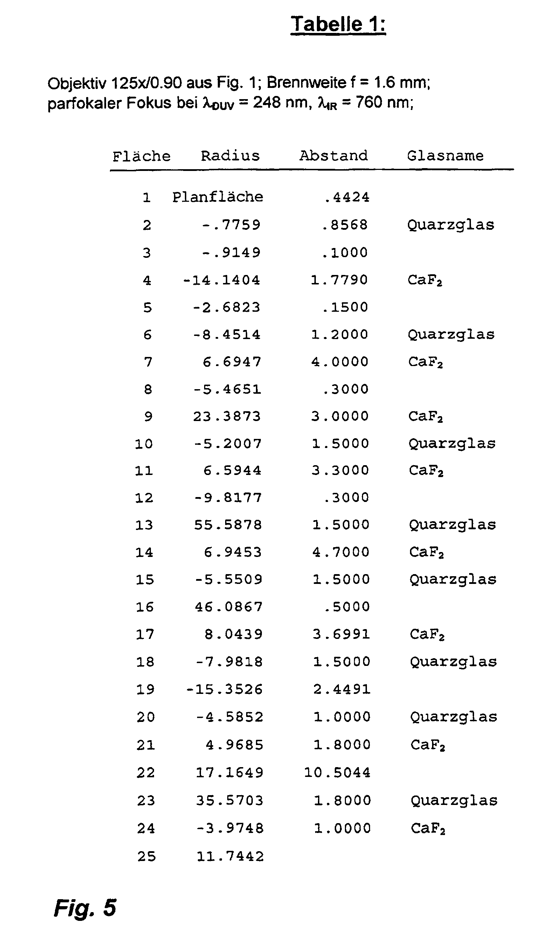

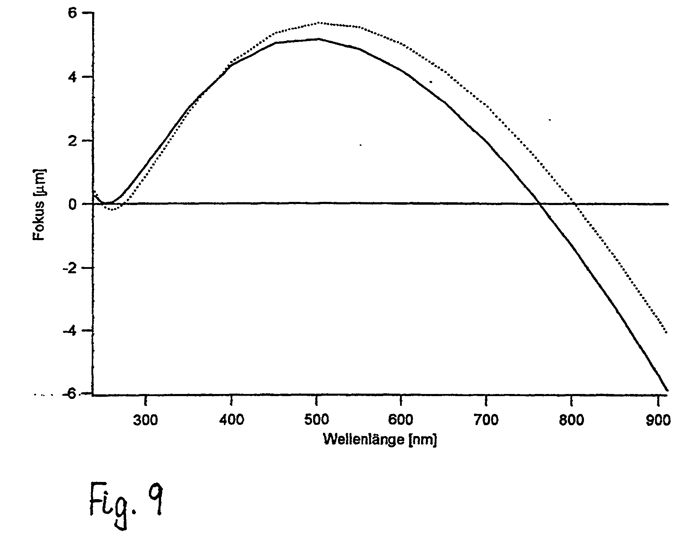

Das in ***Fig.1*** dargestellte Objektiv 125x/0.90 hat eine Brennweite von 1,60 mm, einen Fokus für eine DUV-Wellenlänge λ_{DUV} = 248 nm ± 8 nm und einen Fokus für eine IR-Wellenlänge λ_{IR} =760 nm. Es weist als sammelnde Linsengruppe ein Dublett L11a+L11b und als erfindungsgemäßes vorletztes Element ein zerstreuendes Dublett L12a+L12b auf, welches aus einer Zerstreuungslinse L12a aus Quarzglas und aus einer Sammellinse L12b aus Flußspat besteht. Es zeichnet sich durch eine längere Brennweite als die andere Ausführungsbeispiele aus. Die Konstruktionsdaten des Objektivs sind in ***Fig. 5*** und die spektralen Bildortkurven in ***Fig. 9*** angegeben.

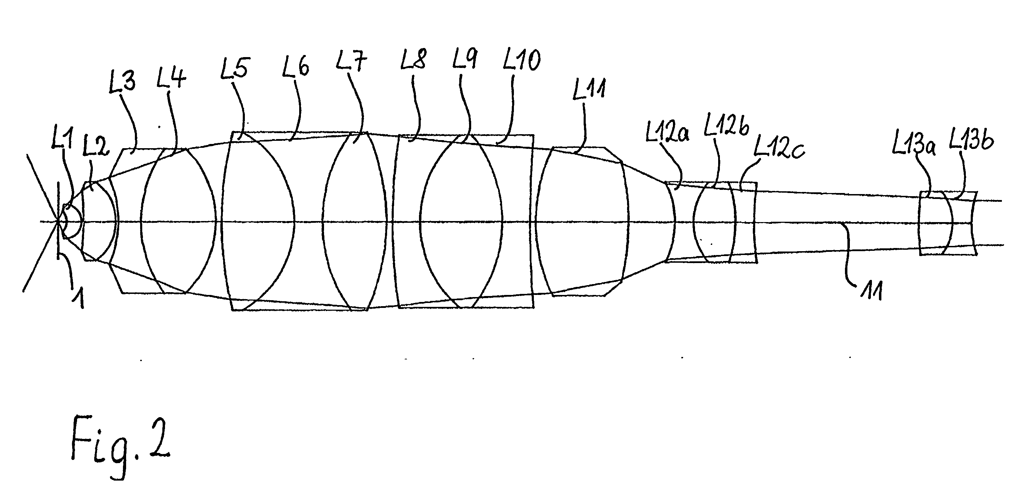

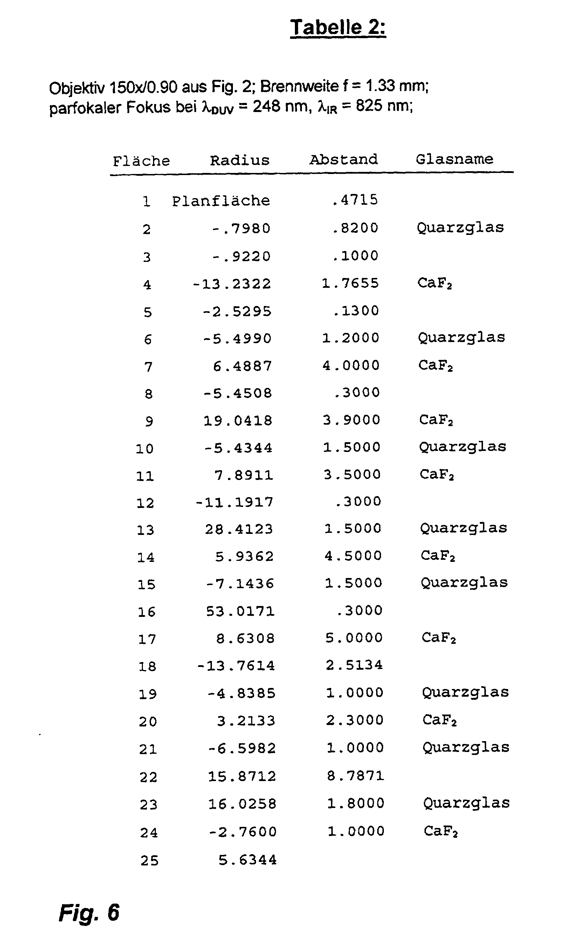

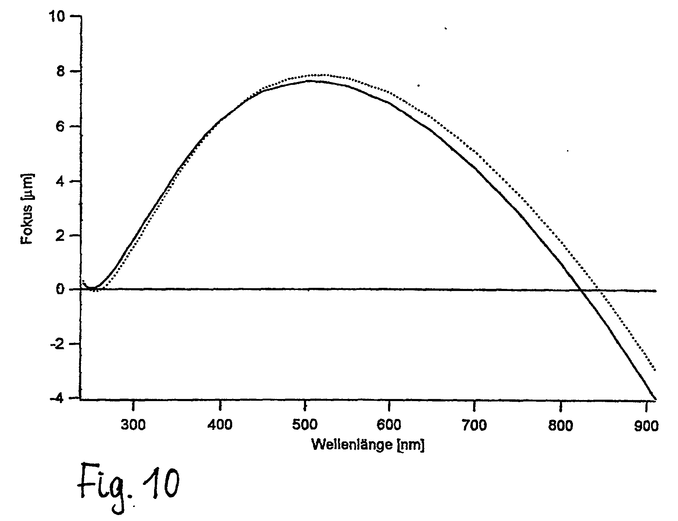

Das in ***Fig.2*** dargestellte Objektiv 150x/0.90 hat eine Brennweite von 1,33 mm und einen DUV-Fokus bei λ_{DUV} = 248 nm ± 8 nm sowie einen IR-Fokus bei λ_{IR} = 825 nm. Es weist als sammelnde Linsengruppe eine Einzellinse L11 und als erfindungsgemäßes vorletztes Element ein zerstreuendes Triplett L12a+L12b+L12c aus Quarzglas/Flußspat/Quarzglas auf. Es besitzt eine etwas größere Verzeichnung als die anderen Ausführungsbeispiele. Die Konstruktionsdaten des Objektivs sind in ***Fig. 6*** angegeben, die spektralen Bildortkurven in ***Fig. 10*****.**

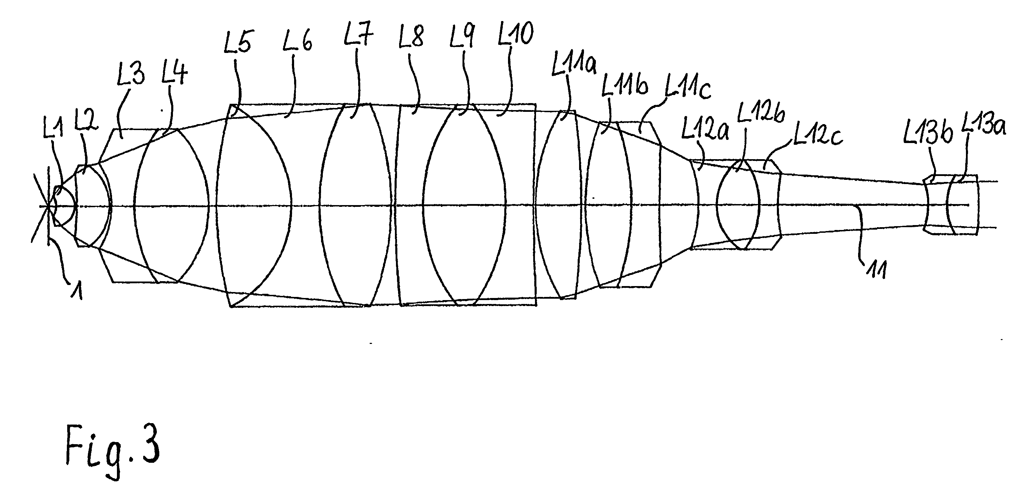

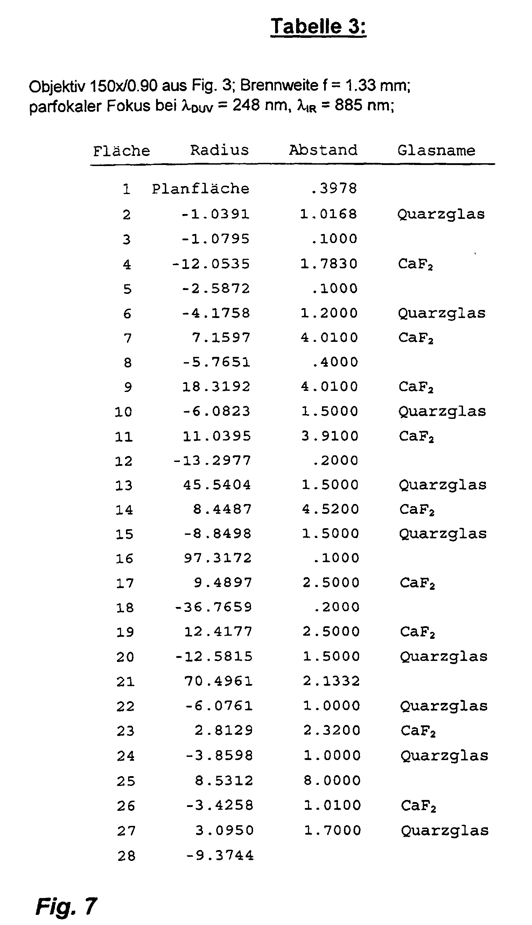

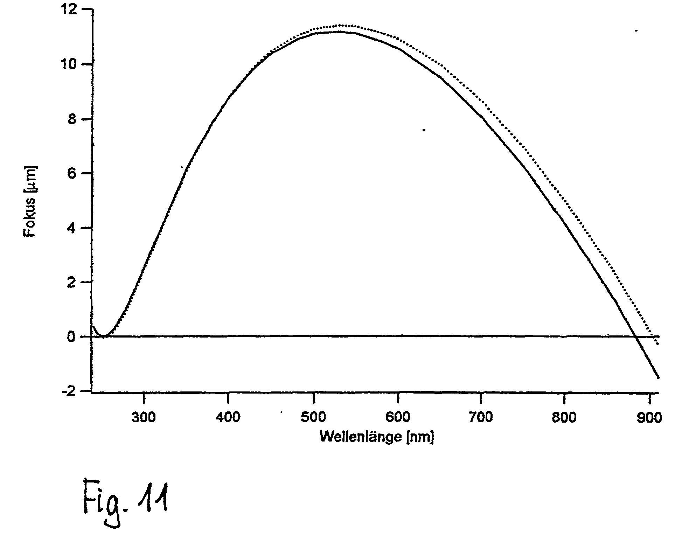

Das in ***Fig.3*** dargestellte Objektiv 150x/0.90 hat eine Brennweite von 1,33 mm, einen DUV-Fokus bei λ_{DUV} = 248 nm ± 8 nm und einen parfokalen Fokus bei einer IR-Wellenlänge λ_{IR} = 885 nm. Es weist als sammelnde Linsengruppe eine Einzellinse L11a und ein Dublett L11b+L11c und ein erfindungsgemäßes zerstreuendes Triplett L12a+L12b+L12c aus Quarzglas/Flußspat/Quarzglas auf. Das Objektiv ist gut korrigiert und relativ wenig toleranzempfindlich. Die Konstruktionsdaten des Objektivs sind in ***Fig. 7*** angegeben, die spektralen Bildortkurven in ***Fig. 11*****.**

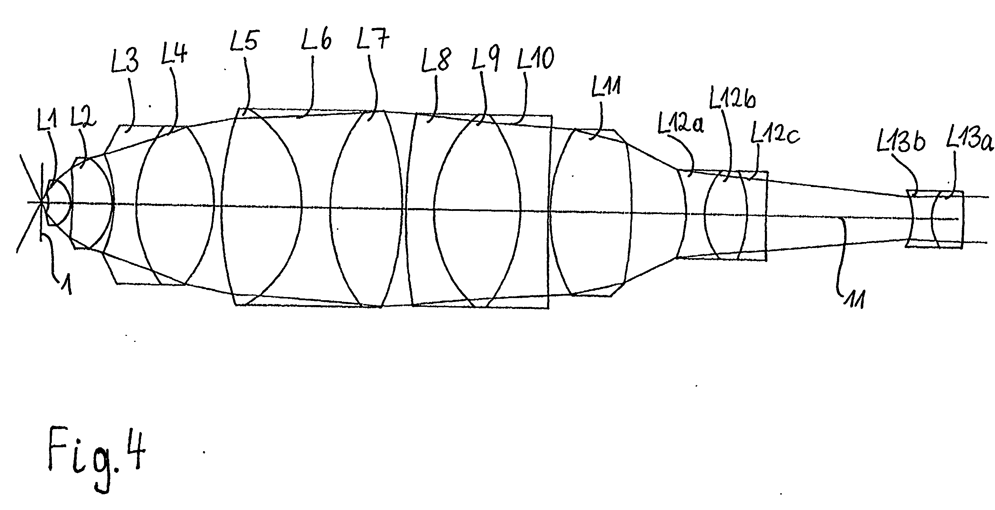

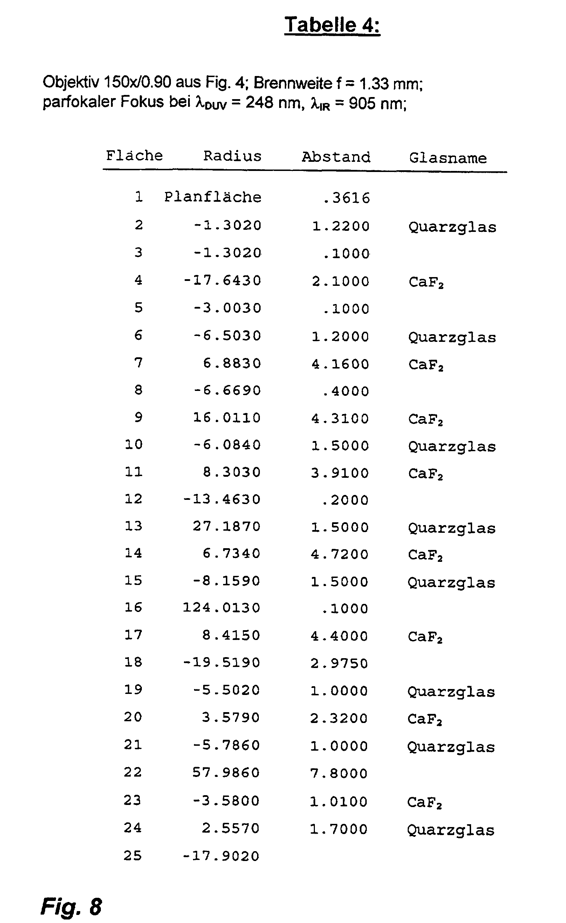

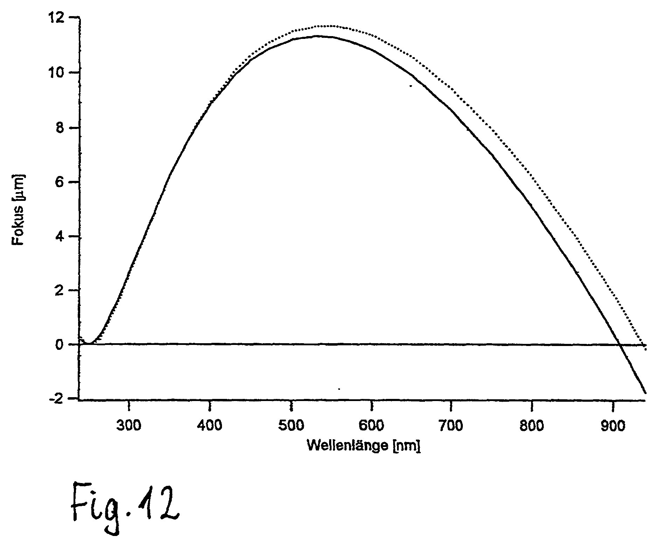

Das in ***Fig.4*** dargestellte Objektiv 150x/0.90 hat eine Brennweite von 1,33 mm, einen DUV-Fokus bei λ_{DUV} = 248 nm ± 8 nm und einen parfokalen IR-Fokus bei λ_{IR} =905 nm. Es weist als sammelnde Linsengruppe eine Einzellinse L11 und ein erfindungsgemäßes zerstreuendes Triplett L12a+L12b+L12c aus Quarzglas/Flußspat/Quarzglas auf. Das Objektiv zeichnet sich durch eine geringe Verzeichnung aus, ist aber toleranzempfindlicher als die anderen Ausführungsbeispiele. Die Konstruktionsdaten des Objektivs sind in ***Fig. 8*** angegeben, die spektralen Bildortkurven in ***Fig. 12*****.**

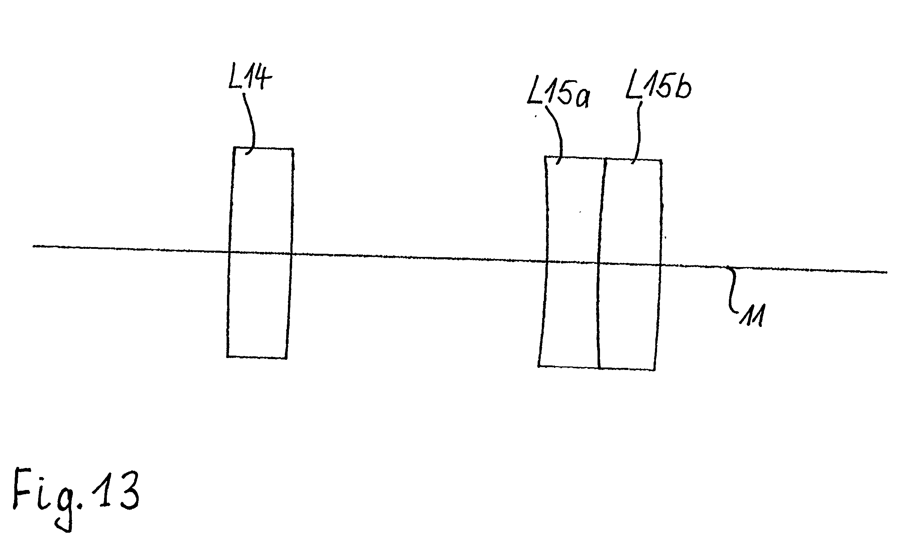

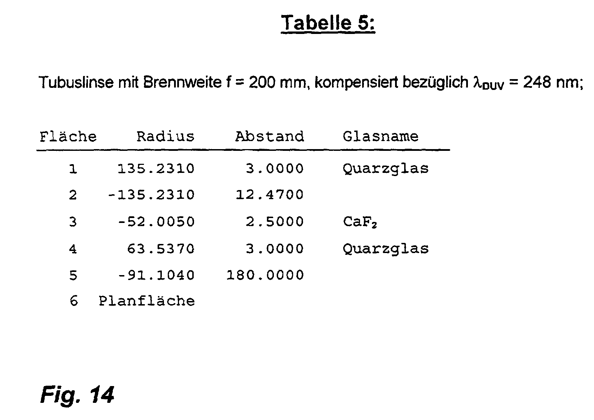

Die beispielhaft genannten Objektive der ***Fig. 1-4*** sind für einen Unendlich-Strahlengang gerechnet und bilden mit einer Tubuslinse ein Kompensationssystem für den DUV-Wellenlängenbereich λ_{DUV} = 248 nm ± 8 nm. ***Fig. 13*** zeigt einen Schnitt durch das mit den erfindungsgemäßen Objektiven verwendete Tubuslinsensystem. Es besteht aus einer Sammellinse L14 und einem Dublett L15a+L15b. ***Fig. 14*** zeigt Tabelle 5 mit den zugehörigen Konstruktionsdaten des Tubuslinsensystems aus ***Fig.13*****.**

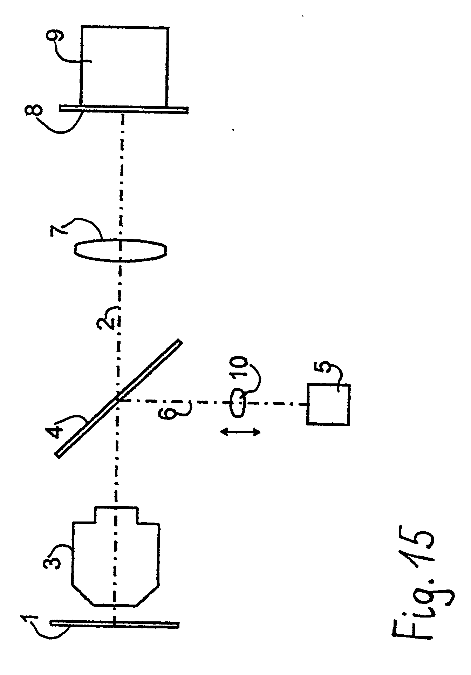

Die Kompensation erfolgt stets für das gewählte DUV-Wellenlängenband λ_{DUV} ± Δλ, jedoch nicht für die jeweilige IR-Wellenlänge, die nicht mit abgebildet wird. Dies verdeutlicht ***Fig. 15.*** Sie zeigt einen von einem Objekt 1 ausgehenden Abbildungsstrahlengang 2. Auf diesem gelangt das DUV-Beleuchtungslicht durch ein Objektiv 3 zu einem Strahlteiler 4. Dieser Strahlteiler 4 dient als Ein- und Auskoppel-Element für das IR-Licht eines IR-Laser-Autofokus 5. Das von dem IR-Laser-Autofokus 5 über den Autofokusstrahlengang 6 ausgehende IR-Laserlicht wird an dem Strahlteiler 4 zum Objektiv 3 und damit in Richtung des Objekts 1 abgelenkt und kehrt auf umgekehrtem Wege wieder zu dem IR-Laser-Autofokus 5 zurück. Das DUV-Licht geht durch den Strahlteiler 4 und wird durch ein Tubuslinsensystem 7 in eine Zwischenbildebene 8 abgebildet. Dort befindet sich das Target einer DUV-Kamera 9. Da das IR-Licht nicht in die Zwischenbildebene 8 gelangt, muß das Tubuslinsensystem 7 nur für das DUV-Licht korrigiert sein.

Es muß daher für Objektive, die für unterschiedliche DUV-Wellenlängenbänder gerechnet sind, ein jeweils unterschiedliches, für das betreffende DUV-Band kompensierendes Tubuslinsensystem gerechnet werden.

Anhand der ***Fig. 15*** kann eine weiterreichende Verwendung der Objektive erläutert werden. So kann zwischen dem Strahlteiler 4 und dem IR-Laser-Autofokus 5 eine Offset-Linse 10 eingefügt werden. Mit dieser kann die nutzbare IR-Autofokus-Wellenlänge um einen festen Betrag bis zu ca. ± 20 nm geändert werden. Dadurch existiert um jede IR-Fokuswellenlänge λ_{IR} ein Wellenlängenbereich, in dem noch mit dem IR-Autofokus gearbeitet werden kann. So kann beispielsweise mit einem Objektiv, für das eine IR-Fokus-Wellenlänge λ_{IR}= 825 nm angegeben ist (vergl. ***Fig. 2***), mit einem IR-Autofokus mit einer Laserwellenlänge zwischen 805 nm und 845 nm autofokussiert werden.

Das bedeutet, daß auch das Objektiv aus ***Fig. 1*** IR-autofokus-tauglich ist. Dieses Objektiv besitzt zwar lediglich einen parfokalen Fokus für eine IR-Wellenlänge λ_{IR} = 760 nm , was noch nicht ganz dem IR-Bereich zugeordnet wird, weil der IR-Bereich aufgrund einer Normenfestlegung erst bei 780 nm beginnt. Das Objektiv kann aber dennoch durch Verwendung einer Offset-Linse im Autofokus-Strahlengang mit einer Laserwellenlänge zwischen 740 nm und 780 nm und somit auch bei einer IR-Wellenlänge (780 nm) betrieben werden.

Die Breite des mit einem Objektiv nutzbaren IR-Bereichs um die angegebene IR-Fokus-Wellenlänge hängt von der Steilheit der spektralen Bildortkurven im Null-Durchgang bei der IR-Fokus-Wellenlänge ab. Je flacher der Null-Durchgang ist, desto breiter ist der nutzbare IR-Wellenlängenbereich für die Auswahl der Autofokus-Laser. Auf diese Weise kann mit einer relativ geringen Anzahl von Objektiven der für den IR-Autofokusbetrieb interessierende Wellenlängenbereich abgedeckt werden.

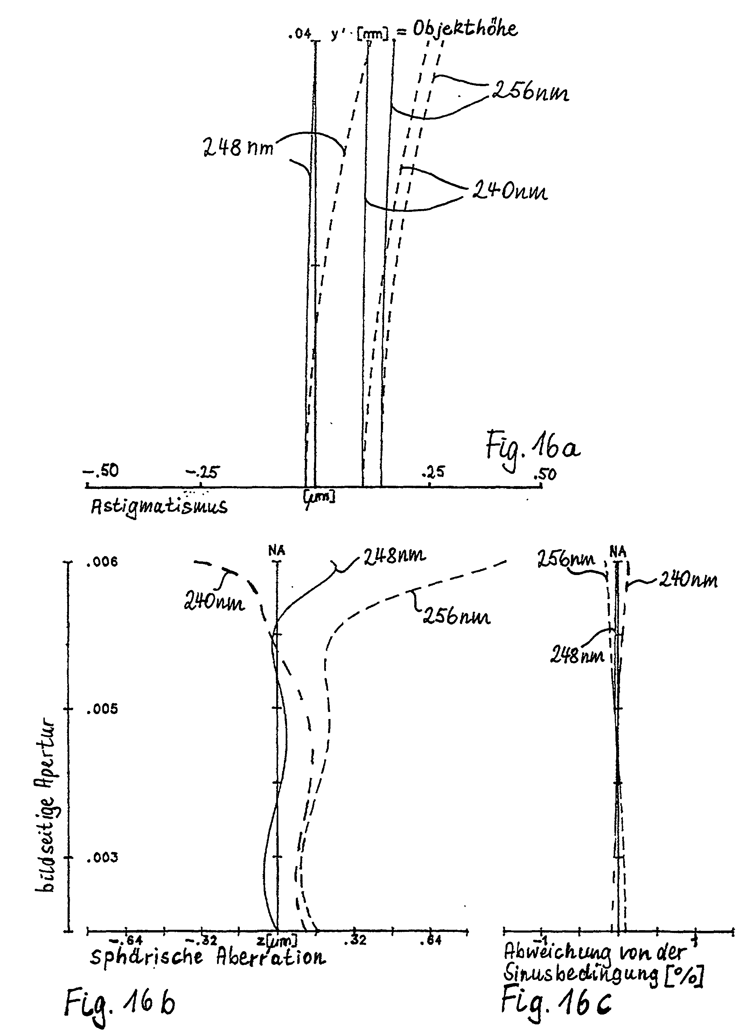

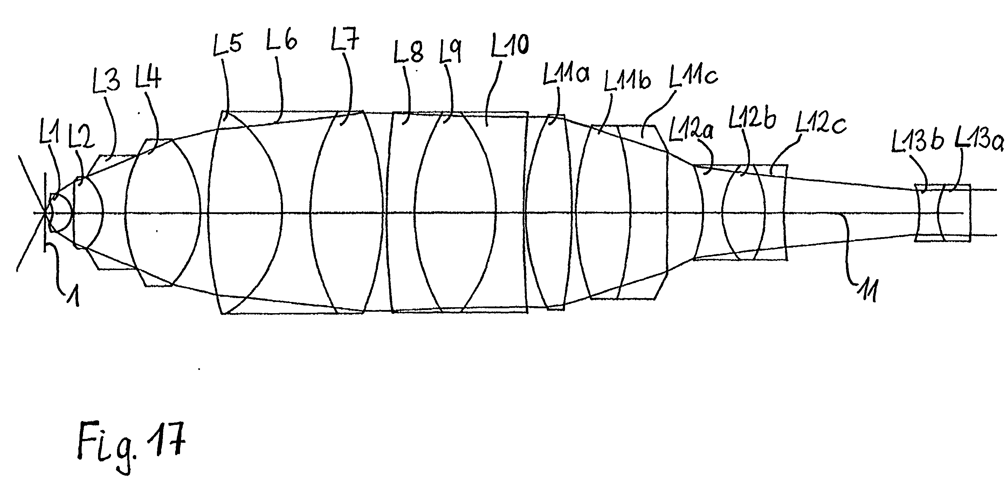

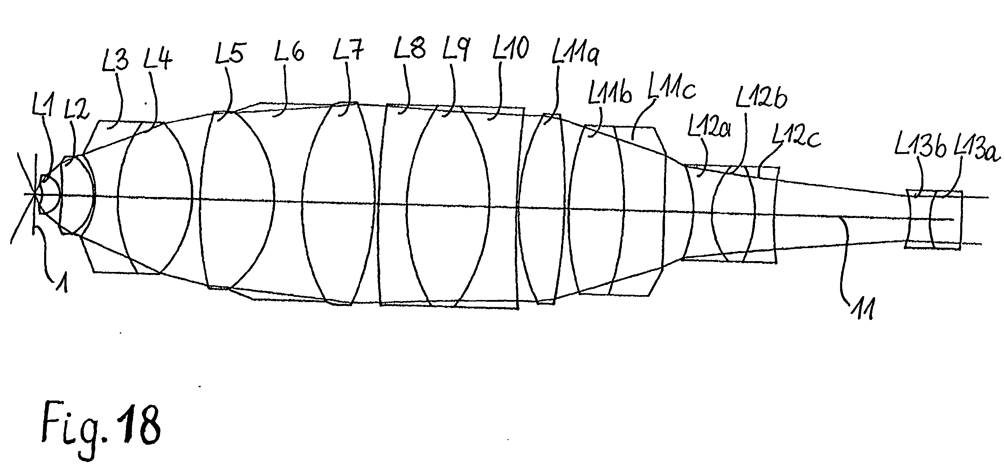

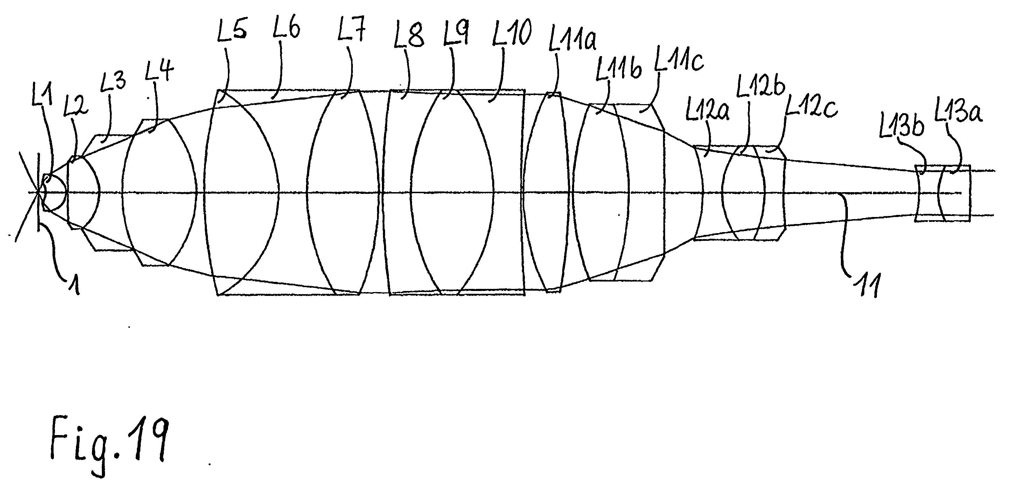

Anhand der ***Fig. 16a-c*** wird beispielhaft die Korrektion des Kompensationssystems - bestehend aus dem Objektiv aus ***Fig. 4*** und dem Tubuslinsensystem aus ***Fig. 13*** - jeweils für den korrigierten DUV-Wellenlängenbereich anhand der mittleren Wellenlänge 248 nm und der beiden um 8 nm beabstandeten Wellenlängen, also für 240 nm und 256 nm, gezeigt. ***Fig. 16a*** zeigt den Astigmatismus in Abhängigkeit von der Objekthöhe y' (= Abstand eines Objektpunktes von der optischen Achse) in Form der sagittalen Bildschale (durchgezogene Linie) und der meridionalen Bildschale (gestrichelte Linie). ***Fig. 16b*** zeigt die sphärische Aberration z in Abhängigkeit von der bildseitigen Apertur. ***Fig. 16c*** zeigt die Abweichung von der Sinusbedingung in Abhängigkeit von der bildseitigen Apertur. Man sieht, daß das Kompensationssystem sehr gut korrigiert ist. Dies gilt in ähnlicher Weise auch für die anderen Ausführungsbeispiele.

Nachfolgend werden die Objektive in ***Fig. 17-19*** beschrieben. Sie sind alle für eine DUV-Wellenlängenbereich λ_{DUV}= 266 nm ± 8 nm korrigiert und unterscheiden sich durch die angegebenen IR-Fokus-Wellenlängen.

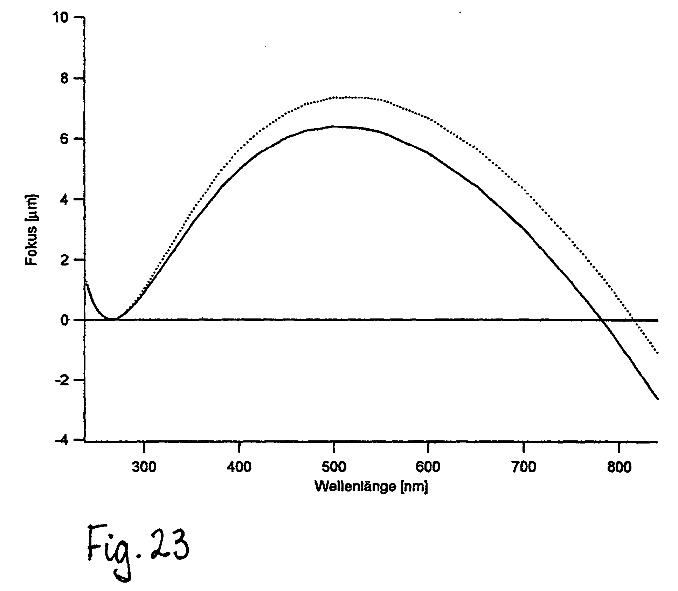

Das in ***Fig. 17*** dargestellte Objektiv 150x/0.90 hat eine Brennweite von 1,33 mm, einen DUV-Fokus bei λ_{DUV} = 266 nm ± 8 nm und einen parfokalen IR-Fokus bei λ_{IR} = 780 nm. Im vorderen Teil zeigt es eine Besonderheit: so weist es anstelle der Einzellinse L2 und des Dubletts L3+L4 des weiter oben beschriebenen Schemas ein Triplett L2+L3+L4 Flußspat/Quarzglas/ Flußspat auf. Femer besitzt das Objektiv als sammelnde Linsengruppe ein Dublett L11a+L11b und als erfindungsgemäßes vorletztes Element ein zerstreuendes Triplett L12a+L12b+L12c aus Quarzglas/Flußspat/Quarzglas. Das Objektiv zeichnet sich durch eine geringe Verzeichnung aus und ist relativ wenig toleranzempfindlich. Die Konstruktionsdaten des Objektivs sind in ***Fig. 20*** angegeben, die spektralen Bildortkurven in ***Fig. 23.***

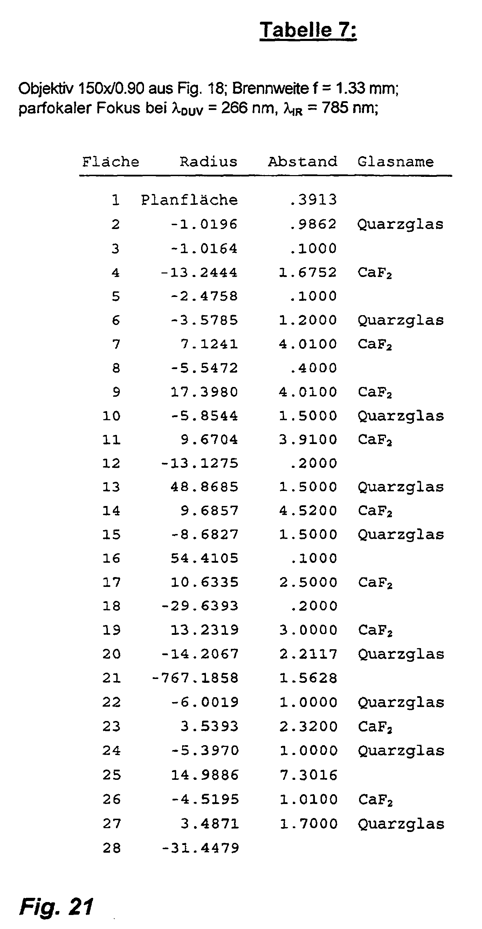

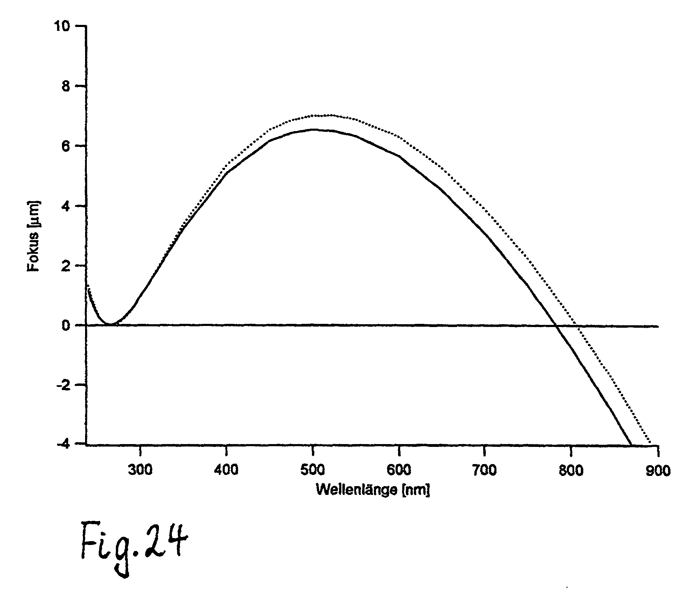

Das in ***Fig.18*** dargestellte Objektiv 150x/0.90 hat eine Brennweite von 1,33 mm, einen DUV-Fokus bei λ_{DUV} = 266 nm ± 8 nm und einen parfokalen IR-Fokus bei einer IR-Wellenlänge λ_{IR} =785 nm. Es weist als sammelnde Linsengruppe eine Einzellinse L11a und ein Dublett L11b+L11c und ein erfindungsgemäßes zerstreuendes Triplett L12a+L12b+L12c aus Quarzglas/Flußspat/ Quarzglas auf. Das Objektiv zeichnet sich durch eine geringe Verzeichnung aus und ist relativ wenig toleranzempfindlich. Die Konstruktionsdaten des Objektivs sind in ***Fig. 21*** angegeben, die spektralen Bildortkurven in ***Fig. 24.***

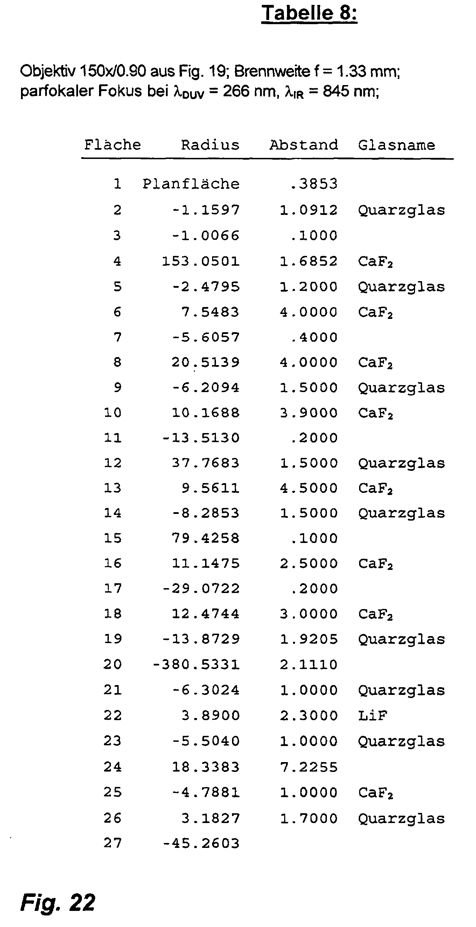

Das in ***Fig. 19*** dargestellte Objektiv 150x/0.90 hat eine Brennweite von 1,33 mm, einen DUV-Fokus bei λ_{DUV} = 266 nm ± 8 nm und einen parfokalen Fokus bei einer IR-Wellenlänge λ_{IR} = 845 nm. Im vorderen Teil zeigt es wiederum eine Besonderheit: so weist es anstelle der Einzellinse L2 und des Dubletts L3+L4 des weiter oben beschriebenen Schemas ein Triplett L2+L3+L4 Flußspat/Quarzglas/ Flußspat auf. Es weist darüber hinaus als sammelnde Linsengruppe eine Einzellinse L11a und ein Dublett L11b+L11c und als erfindungsgemäßes vorletztes Element ein zerstreuendes Triplett L12a+L12b+L12c aus Quarzglas/Lithiumfluorid /Quarzglas auf. Durch die Verwendung von Lithiumfluorid anstelle von Flußspat in dem zerstreuenden Triplett wird der Farblängsfehler kleiner. Das Objektiv hat daher einen sehr gut korrigierten Farblängsfehler und ist relativ wenig toleranzempfindlich. Die Konstruktionsdaten des Objektivs sind in ***Fig. 22*** angegeben, die spektralen Bildortkurven in ***Fig*****.** ***25.***

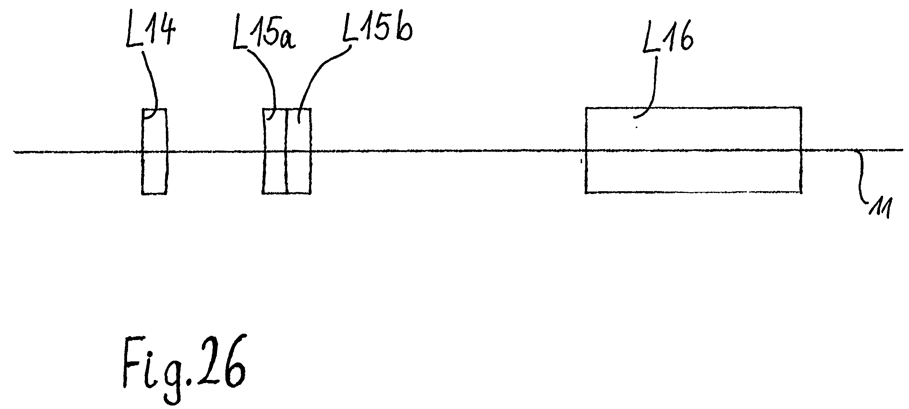

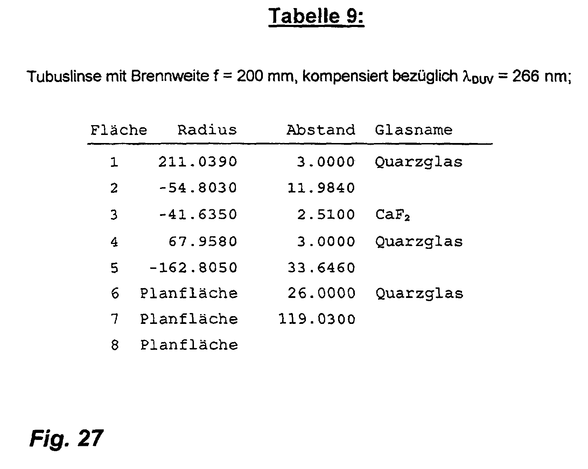

Die Objektive der ***Fig. 17-19*** sind ebenfalls für einen Unendlich-Strahlengang gerechnet und bilden mit einer Tubuslinse ein Kompensationssystem für den DUV-Wellenlängenbereich λ_{DUV} = 266 nm ± 8 nm. ***Fig. 26*** zeigt einen Schnitt durch das mit den erfindungsgemäßen Objektiven aus ***Fig. 17-19*** verwendete Tubuslinsensystem. Es besteht aus einer Sammellinse L14, einem Dublett L15a+L15b und einem Prisma L16. ***Fig. 27*** zeigt Tabelle 9 mit den zugehörigen Konstruktionsdaten des Tubuslinsensystems aus ***Fig. 26.***

### Bezugszeichenliste

- 1 :: Objekt
- 2 :: Abbildungsstrahlengang
- 3 :: Objektiv
- 4 :: Strahlteiler
- 5 :: IR-Laser-Autofokus
- 6 :: Autofokusstrahlengang
- 7 :: Tubuslinsensystem
- 8 :: Zwischenbildebene
- 9 :: DUV-Kamera
- 10 :: Offset-Linse
- 11 :: optische Achse

- L1 - L13 :: Linsen der Objektive in den ***Fig. 1-4 u. 17-18***
- L14 - L15 :: Linsen der Tubuslinsensysteme aus den ***Fig. 13 u. 26***
- L16 :: Prisma des Tubuslinsensystems aus der ***Fig. 26***

## Patentansprüche

1. DUV-geeignetes Mikroskop-Objektiv, das Linsengruppen aus Quarzglas und Flussspat enthält und einen DUV-Fokus bei einer DUV-Wellenlänge λ_{DUV} ≥ 235 nm aufweist,
**dadurch gekennzeichnet,**
a) dass der DUV-Fokus einen DUV-Wellenlängenbereich λ_{DUV} ± Δλ mit Δλ= 8 nm umfasst,
b) dass eine von der dem Objekt zagewandten Frontline ausgehend unmittelbar vor der bildseitig letzten Linse liegende Linsengruppe (L12a, L12b, L12c) des Objektivs beidseitig konkav ausgebildet ist, wobei ihr objektseitiger Außenradius kleiner als ihr bildseitiger Außenradius ist und das Größenverhältnis der Außenradien so gewählt ist, dass das Objektiv (3) zusätzlich einen IR-Fokus für eine IR-Wellenlänge λ_{IR} ≥ 760 nm bei derselben Fokuslage wie der DUV-Fokus bei λ_{DUV} aufweist,
c) und dass die besagte Linsengruppe (L12a, L12b, L12c) entweder als ein Dublett oder ein Triplett oder als ein Dublett in Kombination mit einer Einzellinse oder nur aus Einzellinsen aufgebaut ist und dass als Materialien für die besagte Linsengruppe (L12a, L12b, L12c) Kombinationen aus Quarzglas und Flussspat oder aus Quarzglas und Lithiumfluorid verwendet werden.

2. Objektiv (3) nach Anspruch 1,
**dadurch gekennzeichnet, dass**
die besagte Linsengruppe als ein beidseitig konkaves Dublett (L12a, L12b) ausgebildet ist, das in Abbildungsrichtung die Materialfolge Quarzglas/Flussspat aufweist.

3. Objektiv (3) nach Anspruch 1,
**dadurch gekennzeichnet, dass**
die besagte Linsengruppe als ein beidseitig konkaves Triplett (L12a, L12b, L12c) ausgebildet ist, das in Abbildungsrichtung die Materialfolge Quarzglas/Flussspat/Quarzglas aufweist.

4. Objektiv (3) nach Anspruch 1,
**dadurch gekennzeichnet, dass**
die besagte Linsengruppe als ein beidseitig konkaves Triplett (L12a, L12b, L12c) ausgebildet ist, das in Abbildungsrichtung die Materialfolge Quarzglas/Lithiumfluorid/Quarzglas aufweist.

5. Objektiv (3) nach Anspruch 1,
**dadurch gekennzeichnet, dass**
die besagte Linsengruppe aus Einzellinsen (L12a, L12b, L12c) aus Quarzglas und Flussspat aufgebaut ist.

6. Objektiv (3) nach Anspruch 1,
**dadurch gekennzeichnet, dass**
die besagte Linsengruppe (L12a, L12b, L12c) aus Einzellinsen aus Quarzglas und Lithiumfluorid aufgebaut ist.

7. Objektiv (3) nach Anspruch 1,
**dadurch gekennzeichnet, dass**
das Objektiv (3) in Abbildungsrichtung gesehen folgenden schematischen Aufbau besitzt:
- eine sammelnde Einzellinse (L1) aus Quarzglas als Frontlinse,
- eine sammelnde Einzellinse (L2) aus Flussspat,
- ein Dublett (L3+L4), bestehend aus einer Zerstreuungslinse (L3) aus Quarzglas und einer Sammellinse (L4) aus Flussspat,
- ein Triplett (L5+L6+L7) aus Flussspat/Quarzglas/Flussspat,
- ein Triplett (L8+L9+L10) aus Quarzglas/Flussspat/ Quarzglas,
- eine sammelnde Linsengruppe (L11, L11a, L11b, L11c),
- eine zerstreuende Linsengruppe (L12, L12a, L12b, L12c), die beidseits konkav geformt ist und deren objektseitiger Außenradius kleiner ist als der bildseitige Außenradius,
- und ein zerstreuendes Dublett (L13a+L13b), bestehend aus einer Sammellinse (L13a) aus Quarzglas und einer Zerstreuungslinse (L13b) aus Flussspat.

8. Objektiv (3) nach Anspruch 7,
**dadurch gekennzeichnet, dass**
die sammelnde Einzellinse (L2) und das Dublett (L3+L4) zu einem Triplett (L2+L3+L4) mit der Materialfolge Flussspat/Quarzglas/Flussspat vereinigt sind.

9. Objektiv (3) nach Anspruch 1,
**dadurch gekennzeichnet, dass**
die Wellenlänge λ_{DUV} des IR-Fokus zwischen 760 nm und 920 nm liegt.

10. Objektiv (3) nach Anspruch 1,
**dadurch gekennzeichnet, dass**
die Wellenlänge λ_{IR} des DUV-Fokus zwischen 235 nm und 300 nm liegt.

## Claims

1. DUV-capable microscope objective which includes lens groups made from silica glass and fluorite, and has a DUV focus at a DUV wavelength λ_{DUV} ≥ 235 nm,
**characterized**
a) in that the DUV focus covers a DUV wavelength region λ_{DUV} ± Δλ, where Δλ = 8 nm,
b) in that a lens group (L12a, L12b, L12c) of the objective which starts from the front lens facing the object and is situated directly upstream of the image-side last lens is designed to be concave at both ends, its object-side outer radius being smaller than its image-side outer radius, and the ratio of the outer radii being selected such that the objective (3) additionally has an IR focus for an IR wavelength λ_{IR} ≥ 760 nm given the same focal position as the DUV focus at λ_{DUV},
c) and in that the said lens group (L12a, L12b, L12c) is constructed either as a doublet or a triplet or as a doublet in combination with an individual lens or only from individual lenses, and that combinations of silica glass and fluorite or of silica glass and lithium fluoride are used as materials for the said lens group (L12a, L12b, L12c).

2. Objective (3) according to Claim 1, **characterized in that** the said lens group is designed as a doublet (L12a, L12b) which is concave at both ends and has the material sequence of silica glass/fluorite in the imaging direction.

3. Objective (3) according to Claim 1, **characterized in that** the said lens group is designed as a triplet (L12a, L12b, L12c) which is concave at both ends and has the material sequence of silica glass/fluorite/silica glass in the imaging direction.

4. Objective (3) according to Claim 1, **characterized in that** the said lens group is designed as triplet (L12a, L12b, L12c) which is concave at both ends and has the material sequence of silica glass/lithium fluoride/silica glass in the imaging direction.

5. Objective (3) according to Claim 1, **characterized in that** the said lens group is constructed from individual lenses (L12a, L12b, L12c) made from silica glass and fluorite.

6. Objective (3) according to Claim 1, **characterized in that** the said lens group (L12a, L12b, L12c) is constructed from individual lenses made from silica glass and lithium fluoride.

7. Objective (3) according to Claim 1, **characterized in that** the objective (3) has the following diagrammatic structure when seen in the imaging direction:
- a positive individual lens (L1) made from silica glass as front lens,
- a positive individual lens (L2) made from fluorite,
- a doublet (L3 + L4) consisting of a diverging lens (L3) made from silica glass, and a positive lens (L4) made from fluorite,
- a triplet (L5 + L6 + L7) made from fluorite/silica glass/fluorite,
- a triplet (L8 + L9 + L10) made from silica glass/fluorite/silica glass,
- a positive lens group (L11, L11a, L11b, L11c),
- a diverging lens group (L12, L12a, L12b, L12c) which is concavely shaped at both ends and whose object-side outer radius is smaller than the image-side outer radius,
- and a diverging doublet (L13a + L13b) consisting of a positive lens (L13a) made from silica glass, and a diverging lens (L13b) made from fluorite.

8. Objective (3) according to Claim 7, **characterized in that** the positive individual lens (L2) and the doublet (L3 + L4) are united to form a triplet (L2 + L3 + L4) having the material sequence of fluorite/silica glass/fluorite.

9. Objective (3) according to Claim 1, **characterized in that** the wavelength λ_{DUV} of the IR focus is between 760 nm and 920 nm.

10. Objective (3) according to Claim 1, **characterized in that** the wavelength λ_{IR} of the DUV focus is between 235 nm and 300 nm.

## Revendications

1. Objectif de microscope pour l'ultraviolet profond, comprenant des groupes de lentilles en verre de quartz et fluorine et présentant un foyer pour l'ultraviolet profond à une longueur d'onde pour l'ultraviolet profond λ_{DUV} ≥ 235 nm,n **caractérisé en ce que**
a) le foyer pour l'ultraviolet profond comprend une gamme d'ondes λ_{DUV} ±Δλ, où Δλ = 8 nm,
b) un groupe de lentilles (L12a, L12b, L12c) de l'objectif, situé directement devant la dernière lentille côté image en partant de la lentille frontale orientée vers l'objet, est réalisé de façon concave des deux côtés, son rayon extérieur côté objet étant inférieur à son rayon extérieur côté image et la proportion des rayons extérieurs étant choisie de telle sorte que l'objectif (3) présente en outre un foyer pour l'infrarouge pour une longueur d'onde infrarouge λ_{IR} ≥ 760 nm avec la même position de foyer que le foyer pour l'ultraviolet profond avec λ_{DUV}, et
c) ledit groupe de lentilles (L12a, L12b, L12c) est constitué par un doublet ou un triplet ou un doublet en combinaison avec une lentille individuelle ou uniquement par des lentilles individuelles, et **en ce que** comme matériaux pour ledit groupe de lentilles (L12a, L12b, L12c) des combinaisons de verre de quartz et de fluorine ou de verre de quartz et de fluorure de lithium sont utilisées.

2. Objectif (3) selon la revendication 1, **caractérisé en ce que** ledit groupe de lentilles est réalisé comme un doublet concave des deux côtés (L12a, L12b) qui présente dans la direction de reproduction la séquence de matériaux verre de quartz/ fluorine.

3. Objectif (3) selon la revendication 1, **caractérisé en ce que** ledit groupe de lentilles est réalisé comme un triplet concave des deux côtés (L12a, L12b, L12c) qui présente dans la direction de reproduction la séquence de matériaux verre de quartz/ fluorine/ verre de quartz.

4. Objectif (3) selon la revendication 1, **caractérisé en ce que** ledit groupe de lentilles est réalisé comme un triplet concave des deux côtés (L12a, L12b, L12c) qui présente dans la direction de reproduction la séquence de matériaux verre de quartz/ fluorure de lithium/ verre de quartz.

5. Objectif (3) selon la revendication 1, **caractérisé en ce que** ledit groupe de lentilles est constitué par des lentilles individuelles (L12a, L12b, L12c) en verre de quartz et fluorine.

6. Objectif (3) selon la revendication 1, **caractérisé en ce que** ledit groupe de lentilles (L12a, L12b, L12c) est constitué par des lentilles individuelles en verre de quartz et fluorure de lithium.

7. Objectif (3) selon la revendication 1, **caractérisé en ce que** l'objectif (3) possède, vu dans la direction de reproduction, la structure schématique suivante :
- une lentille individuelle convergente (L1) en verre de quartz comme lentille frontale,
- une lentille individuelle convergente (L2) en fluorine,
- un doublet (L3+L4), composé d'une lentille divergente (L3) en verre de quartz et d'une lentille convergente (L4) en fluorine,
- un triplet (LS+L6+L7) en fluorine/ verre de quartz/ fluorine,
- un triplet (L8+L9+L10) en verre de quartz/ fluorine/ verre de quartz,
- un groupe de lentilles convergentes (L11, L11a, L11b, L11c),
- un groupe de lentilles divergentes (L12, L12a, L12b, L12c) qui est formé de façon concave des deux côtés et dont le rayon extérieur côté objet est inférieur au rayon extérieur côté image,
- et un doublet divergent (L13a+L13b), composé d'une lentille convergente (L13a) en verre de quartz et d'une lentille divergente (L13b) en fluorine.

8. Objectif (3) selon la revendication 7, **caractérisé en ce que** la lentille individuelle convergente (L2) et le doublet (L3+L4) sont réunis en un triplet (L2+L3+L4) avec la séquence de matériaux fluorine/ verre de quartz/ fluorine.

9. Objectif (3) selon la revendication 1, **caractérisé en ce que** la longueur d'onde λ_{DUV} du foyer pour l'infrarouge se situe entre 760 nm et 920 nm.

10. Objectif (3) selon la revendication 1, **caractérisé en ce que** la longueur d'onde λ_{IR} du foyer pour l'ultraviolet profond se situe entre 235 nm et 300 nm.
